# EUROPÄISCHE PATENTSCHRIFT

(11) **EP 0 891 513 B1**
(45) Veröffentlichungstag und Bekanntmachung des Hinweises auf die Patenterteilung: **16.04.2003**
(21) Anmeldenummer: 98902992.1
(22) Anmeldetag: 09.01.1998
(51) Int. Cl.: F16P 3/16, A41H 37/00

(54) **VORRICHTUNG ZUM ANSETZEN VON NIETEN, KNÖPFEN ODER DERGLEICHEN AN EINE TEXTILIE**
DEVICE FOR SETTING RIVETS, BUTTONS OR THE LIKE ON TEXTILES
DISPOSITIF POUR APPLIQUER DES RIVETS, BOUTONS OU SIMILAIRES SUR DES MATIERES TEXTILES

(30) Priorität: 09.01.1997 DE 19700524
(43) Veröffentlichungstag der Anmeldung: 20.01.1999
(73) Patentinhaber: YKK CORPORATION, Chiyoda-ku, Tokyo (JP)
(72) Erfinder: KAMPS, Rolf, D-42329 Wuppertal (DE)
(74) Vertreter: Patentanwälte Leinweber & Zimmermann
(86) Internationale Anmeldenummer: EP9800105
(87) Internationale Veröffentlichungsnummer: WO98030832

(56) Entgegenhaltungen:
- DE-C- 949 919
- US-A- 4 343 423
- US-A- 4 374 309
- US-A- 4 420 071

## Beschreibung

Die Erfindung bezieht sich auf eine Vorrichtung zum Ansetzen von Nieten, Knöpfen oder dergleichen, die aus einem Artikel-Unter- und einem Artikel-Oberteil bestehen, an eine Textilie oder dergleichen, mit einer das Artikel-Unterteil abstützenden Unterzange und einem den Niethub ausführenden Plunger, dessen unterem Ende eine das Artikeloberteil beaufschlagende Oberzange und dessen oberem Ende eine für die Hubbewegung sorgende Antriebseinrichtung zugeordnet ist, und mit einem in die Bewegungsbahn der Oberzange reichenden, dem Plunger zugeordneten Fingerschutzbügel, der - nach Auslösung eines Plunger-Niethubes - bei Auftreffen auf ein Hindernis vor Erreichen seiner Endstellung die Antriebseinrichtung und damit den Plunger stillsetzt.

Ansetzmaschinen für Bekleidungs- und Lederaccessoires sowie Verschlüsse, die durch Nietmaschinen gebildet werden, sind Sicherheitsvorschriften unterworfen, die den sicheren Gebrauch beim Endanwender bestimmen. Fast alle zu treffenden Sicherheitsmaßnahmen sind aber nachteilig für das Handling, für schnelle Störungsbeseitigungen sowie die Einsicht in den Arbeitsbereich. Deshalb kommt den Sicherheitseinrichtungen eine besondere Bedeutung zu. Diese verursachen nicht unerhebliche Kosten im Verhältnis zu den Maschinengesamtkosten. Neben den geltenden elektrischen Sicherheitsbestimmungen sind Bestimmungen für den Gefahrenbereich im Arbeitsbereich der Maschine zu beachten, wo sich die Oberzange auf die Unterzange zubewegt. In diesem Bereich kann es zu schwersten Hand- und Fingerverletzungen kommen, wenn keine ausreichenden Sicherheitsmaßnahmen getroffen sind. Gemäß den geltenden Richtlinien muß der Zugriff in diesem Bereich so gesichert sein, daß der Sicherheitsabstand, d.h. die verbleibende Öffnungsweite bei der Arbeitshubbewegung kleiner/gleich 4 mm beträgt.

Um dieser Forderung Rechnung zu tragen, sind von den Herstellern verschiedene Systeme entwickelt worden. Da der Arbeitsbereich zum Be- und Entladen möglichst groß sein soll, muß der Gefahrenbereich zwischen Oberzange und Unterzange vor dem Arbeitshub gesichert bzw. kontrolliert werden. Zu diesem Zweck ist es bekannt, die Oberzange so am Plunger anzubinden, daß sie einen Kontakt aufreißt, sobald sich ein Hindernis im Gefahrenbereich befindet. Der Antrieb wird dann über die einfallende Bremse des Bremsmotorantriebes sofort gebremst, und der Arbeitshub wird unterbrochen. Da zum Abtasten des Gefahrenbereichs eine massive Zange Verwendung findet, ergeben schmerzhafte Kontakte mit den sich im Gefahrenbereich befindenden Fingern und Fingernägeln blaue Flecken, obwohl die zulässige Kraft von 50 N für das Sicherheitssystem nicht überschritten wird.

Weiterhin ist ein pneumatisches System bekannt, bei dem der Antrieb drucklos geschaltet wird, sobald der Plunger auf seiner Abwärtsbewegung auf ein Hindernis stößt.

Schließlich ist eine Vorrichtung der eingangs genannten Art bekannt, mit deren Hilfe Hand- und Fingerverletzungen dadurch wirksam vemieden sind, daß neben der Hauptantriebseinrichtung für den Plungerantrieb eine zusätzliche Antriebseinrichtung für den Antrieb des voreilenden Fingerschutzbügels vorgesehen ist. Erst wenn letzterer den Gefahrenbereich innerhalb einer bestimmten Zeit bis zum unteren Endpunkt durchfahren hat, wird die Hauptantriebsvorrichtung gestartet, und der Plunger führt den Arbeitshub aus. Dieses System arbeitet zwar sicher; es benötigt allerdings einen beachtlichen Steueraufwand und eine zusätzliche Antriebsvorrichtung. Außerdem verlängert sich in nachteiliger Weise die Maschinentaktzeit um die Vorlaufzeit des Fingerschutzbügels.

Der Erfindung liegt die Aufgabe zugrunde, die bekannte Vorrichtung so weiter auszubilden, daß trotz baulicher Vereinfachung und Verringerung der Maschinentaktzeit ein wirksamer Fingerschutz sichergestellt ist.

Die Vorrichtung nach der Erfindung, bei der diese Aufgabe gelöst ist, ist dadurch gekennzeichnet, daß der Fingerschutzbügel mit dem auf die Oberzange einwirkenden Plunger im Sinne einer Mitführung bei Auslösung der Hubbewegung durch die Antriebseinrichtung über ein Koppelelement verbunden ist und daß das Koppelelement die Stillsetzung der Antriebseinrichtung bei Auftreffen des Fingerschutzbügels auf das Hindernis auslöst.

Die Erfindung basiert somit auf der Erkenntnis, daß man sich des eigentlichen Plungerhauptantriebes für den Antrieb des Fingerschutzbügels bedienen, also auf eine zusätzliche Antriebsvorrichtung verzichten kann, wenn man dafür sorgt, daß der Antrieb des Fingerschutzbügels von der Plungerbewegung abgeleitet wird, und zwar voreilend in Bezug auf letztere. Aufgrund des Antriebes des Fingerschutzbügels über den Plunger benötigt das System keine Vorlaufzeit, und der Aufwand an Bauteilen ist gering.

Als besonders zweckmäßig hat es sich erwiesen, wenn das Koppelelement durch einen Zweigelenkstab mit einer eingeschalteten Feder gebildet ist und wenn dem Zweigelenkstab ein elektrischer Schalter zugeordnet ist, der im die Antriebseinrichtung des Plungers steuernden Stromkreis liegt und auf eine Längenänderung des Zweigelenkstabes in Folge Auftreffens des Fingerschutzbügels auf das Hindernis und damit Längenänderung unter Spannung der Feder anspricht.

Zweckmäßigerweise umfaßt die Antriebseinrichtung einen Kurbeltrieb mit einer Pleuelstange, deren freies Ende über eine der Kraftübertragung dienende Hebelanordnung am Plunger angreift. Diese Hebelanordnung weist vorteilhafterweise einen im Bereich des Plungers um eine sich im wesentlichen quer zur Bewegungsbahn des Plungers erstreckende Achse verschwenkbar gelagerten zweiarmigen Winkelhebel, dessen erster Arm mit dem freien Ende der Pleuelstange gekoppelt ist und dessen zweiter Arm mit dem Plunger in Antriebsverbindung steht. Eine besonders einfache Ausführung ergibt sich, wenn der zweite Arm des Winkelhebels mit dem Plunger über einen schwenkbar an letzterem angreifenden Lenker gekoppelt ist.

Für die Steuerung des Fingerschutzbügels könnte dem Plunger ein quer abstehendes Führungsglied zugeordnet sein, das mit dem einen Ende des Zweigelenkstabes verbunden ist. Als für eine sanfte Steuerung des Fingerschutzbügels günstiger hat sich eine Ausführung erwiesen, bei der dem Plunger ein im wesentlichen in einer sich parallel zu seiner Achse erstreckenden Ebene in Abhängigkeit von der Plungerbewegung verschwenkbares Nockenelement zugeordnet ist, an dem der zum Fingerschutzbügel führende Zweigelenkstab angelenkt ist.

Dabei ergibt sich eine besonders einfache Lösung, wenn das Nockenelement einen Anfangsnockenabschnitt aufweist, der vom Plunger während seines ersten Hubabschnitts über eine Rolle oder dergleichen beaufschlagbar ist und sich derart schräg zur Plungerachse erstreckt, daß bei Plungerbewegung eine Verschwenkung des Nockenelements erfolgt, und einen mit dem Anfangsnockenabschnitt einen stumpfen Winkel α einschließenden Endnockenabschnitt, der sich derart in Bezug auf die Schwenkachse des Nockenelementes sowie die Rolle erstreckt, daß der Plunger beim Durchlaufen dieses Endnockenabschnitts praktisch keine weitere Schwenkbewegung des Nockenelementes und damit des Fingerschutzbügels mehr bewirkt.

Weitere Einzelheiten, Vorteile und Merkmale ergeben sich aus der folgenden Beschreibung anhand der beigefügten Zeichnung. In dieser sind schematische Ansichten der die Erfindung repräsentierenden Vorrichtung beispielsweise veranschaulicht, und zwar zeigen
Fig. 1 die Vorrichtung in der Ausgangs- bzw. Startposition,
Fig. 2 die Vorrichtung im Augenblick der Startauslösung,
Fig. 3 die Vorrichtung im Augenblick des Nietvorgangs und
Fig. 4 die Vorrichtung im Augenblick des Abschaltens bei Auftreffen auf ein Hindernis.

Wie aus der Zeichnung ersichtlich, umfaßt die Vorrichtung zum Ansetzen von Nieten, Knöpfen oder dergleichen, die in an sich bekannter, nicht näher veranschaulichter Weise aus einem Artikel-Unterteil sowie einem Artikel-Oberteil bestehen, an eine Textilie oder dergleichen eine das Artikel-Unterteil abstützende Unterzange 1 und einen den eigentlichen Niethub ausführenden Plunger 2. Dem unteren Ende des Plungers 2 ist eine das Artikel-Oberteil beaufschlagende Oberzange 3 zugeordnet. Am oberen Ende des Plungers 2 greift eine für die Hubbewegung sorgende Antriebseinrichtung 4 an, und zwar über eine Pleuelstange 5, deren freies Ende an einer der Kraftübertragung dienenden Hebelanordnung 6 angelenkt ist. Diese Hebelanordnung 6 umfaßt einen im Bereich des Plungers 2 um eine sich im wesentlichen quer zur Bewegungsbahn des Plungers 2 erstreckende Achse 7 verschwenkbar gelagerten zweiarmigen Winkelhebel, dessen erster Arm 8 mit dem freien Ende der Pleuelstange 5 gekoppelt ist. Der zweite Arm 9 des Winkelhebels steht mit dem Plunger 2 in Antriebsverbindung. Zu diesem Zweck ist das freie Ende des zweiten Arms 9 des Winkelhebels mit dem Plunger 2 über einen schwenkbar an letzterem angreifenden Lenker 10 gekoppelt.

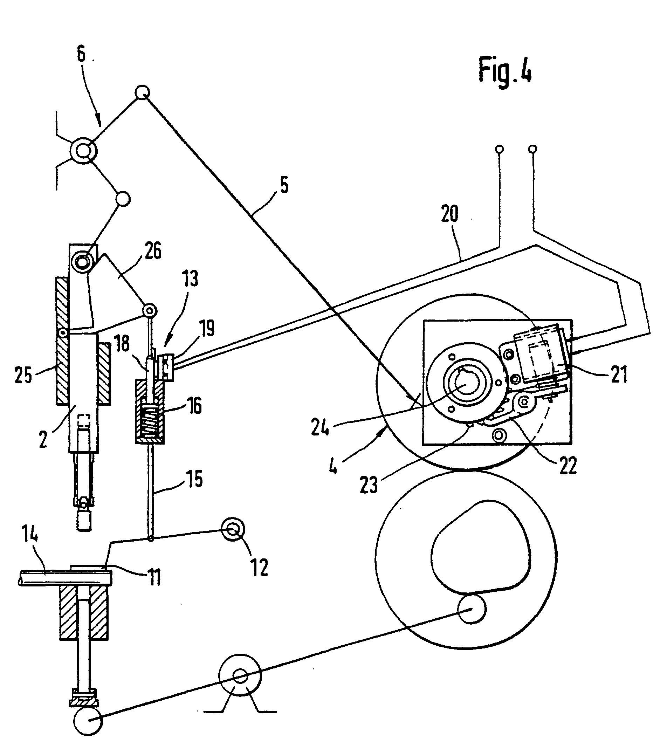

Aus der Zeichnung geht hervor, daß dem Plunger 2 ein Fingerschutzbügel 11 zugeordnet ist, der um eine sich im wesentlichen quer zur Bewegungsbahn des Plungers 2 erstreckende Achse 12 verschwenkbar gelagert ist. Der Fingerschutzbügel 11 ist mit dem auf die Oberzange 3 einwirkenden Plunger 2 im Sinne einer Mitführung bei Auslösung der Hubbewegung durch die Antriebseinrichtung 4 über ein Koppelelement 13 verbunden. Dieses Koppelelement 13 löst die Stillsetzung der Antriebseinrichtung 4 bei Auftreffen des Fingerschutzbügels auf ein Hindernis 14 aus, wie dies in Fig. 4 veranschaulicht ist. Aus der Zeichnung ergibt sich, daß das Koppelelement 13 durch einen Zweigelenkstab 15 mit einer eingeschalteten Feder 16 gebildet ist. Im veranschaulichten Ausführungsbeispiel ist die Feder als Schraubenwendelfeder ausgebildet und in einem zylindrischen Gehäuse 17 gelagert. Das eine Ende der Feder liegt an einem Stößel 18 an, der einen Teil des Zweigelenkstabes 15 bildet, dessen anderer Teil auf der dem Stößel 18 abgelegenen Seite des Gehäuses 17 mit letzterem fest verbunden ist. Oberhalb des Gehäuses 17 befindet sich ein schematisch angedeuteter Schalter 19, der vom Stößel 18 steuerbar ist. Der elektrische Schalter 19 liegt in einem die Antriebseinrichtung 4 des Plungers 2 steuernden Stromkreis 20. Zu diesem Zweck ist der Stromkreis 20 über einen Elektromagneten 21 für die Betätigung einer Schaltklinke 22 geführt. Letztere ist mit einem mit dem Kurbeltrieb für die Pleuelstange 5 verbundenen Zahnkranz 23 kuppelbar, der mit einer konzentrisch angeordneten, von einem Motor konstant angetriebenen Welle 24 über eine nicht dargestellte Schlingfeder eines an sich bekannten Schlingfederkupplungs-Bremssystems in Wirkverbindung steht.

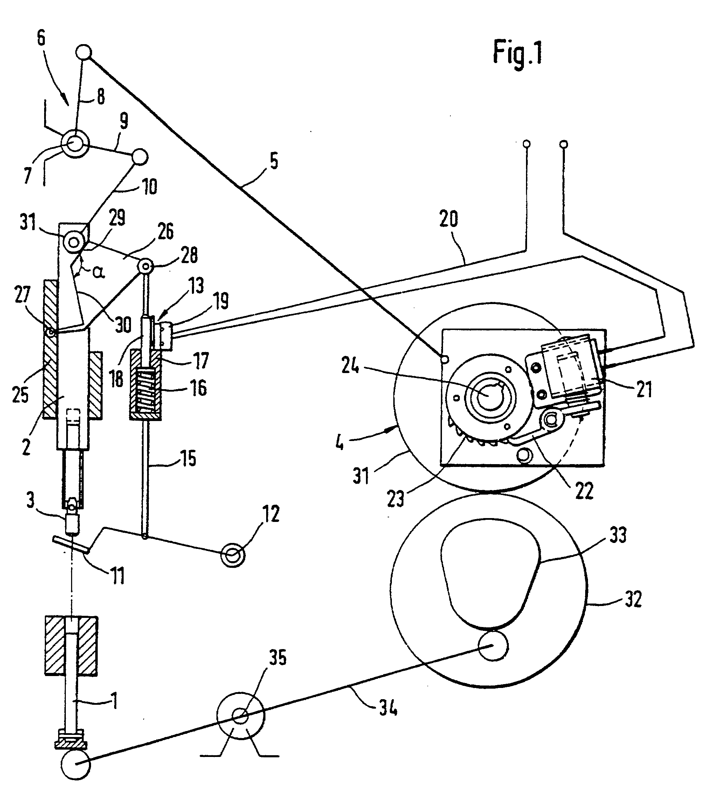

Aus der Zeichnung geht ferner hervor, daß dem Plunger 2, der in der Bohrung eines Führungsgehäuses 25 vertikal verschiebbar gelagert ist, ein Nockenelement 26 zugeordnet ist. Dieses Nockenelement 26 ist in einer parallel zur Achse des Plungers 2 erstreckenden Ebene in Abhängigkeit von der Plungerbewegung verschwenkbar, und zwar um eine im Führungsgehäuse 25 vorgesehene Schwenkachse 27. An einem der Schwenkachse 27 abgelegenen Bereich des Nockenelements 26 ist bei 28 das eine Ende des Zweigelenkstabes 15 angelenkt, der das Nockenelement mit dem Fingerschutzbügel 11 verbindet. Das Nockenelement 26 weist einen Anfangsnockenabschnitt 29 sowie einen Endnockenabschnitt 30 auf, der mit dem Anfangsnockenabschnitt 29 einen stumpfen Winkel α einschließt. Am Plunger 2 ist eine Rolle 31 drehbar gelagert, die der Steuerung der Schwenkbewegung des Nockenelements 26 während des Plungerhubs dient. Im ersten Hubabschnitt des Plungers 2 beaufschlagt die Rolle den Anfangsnockenabschnitt 29, der sich, wie Fig. 1 zeigt, derart schräg zur Plungerachse erstreckt, daß bei Plungerbewegung eine Verschwenkung des Nockenelements im Uhrzeigersinn um die Schwenkachse 27 erfolgt. Der Hub und damit die Schwenkbewegung wird durch Einschaltung der Stromversorgung zum Elektromagneten 21 über den Stromkreis 20 eingeleitet, indem die Schaltklinke 22 die Verzahnung des Schaltrings 23 freigibt, so daß letzterer über die Schlingfeder den Kurbeltrieb mit der Pleuelstange 5, die zur Hebelanordnung 6 führt, von der Welle 24 aus antreibt. Sobald im Laufe der Plungerbewegung die Rolle 31 die Spitze des stumpfen Winkels α zwischen dem Anfangsnockenabschnitt 29 und dem Endnockenabschnitt 30 erreicht hat, befindet sich das Nockenelement 26 in einer Lage, in der sich der Endnockenabschnitt 30 praktisch parallel zur Achse des Plungers 2, d.h. derart in Bezug auf die Schwenkachse 27 erstreckt, daß der Plunger 2, wenn die Rolle 31 diesen Endnockenabschnitt 30 durchläuft, praktisch keine weitere Schwenkbewegung des Nockenelements 26 um die Schwenkachse 27 und damit auch keine Schwenkbewegung des Fingerschutzbügels 11 mehr bewirkt.

Trifft der Fingerschutzbügel 11 im Laufe der vorerwähnten Schwenkbewegung des ihn mitführenden Nockenelements 26, wie in Fig. 4 veranschaulicht, auf ein Hindernis 14 auf, dann führt dies sofort zu einer Längenänderung der Feder 16 im zylindrischen Gehäuse 17, nämlich einer Verkürzung durch Kompression der Feder 16 durch den Stößel 18 und damit einer Beaufschlagung des elektrischen Schalters 19 im Sinne einer Öffnung des über ihn geführten Stromkreises 20 des Elektromagneten 21. Die Schaltklinke 22 fällt sofort ein, blockiert den Schaltring, öffnet die Kupplung des Schlingfederkupplungs-Bremssystems und sorgt so für eine unverzügliche Stillsetzung der Antriebseinrichtung des Plungers 2.

Aus der Zeichnung ergibt sich ferner, daß die Antriebseinrichtung 4 über ihre Kurbeltriebsscheibe 31 mit einer Nockenscheibe 32 gekoppelt ist, die einen Antriebsnocken 33 für die Beaufschlagung eines Schwenkhebels 34 trägt. Dieser ist um eine Schwenkachse 35 schwenkbar gelagert und beaufschlagt mit ihrem freien Ende die Unterzange 1, die der Abstützung des Artikelunterteils dient. Auf diese Weise ist die Unterzange 1 in Gegenrichtung zum Plunger 2 von der Antriebseinrichtung 4 aus steuerbar. Bei Stillsetzung der Antriebseinrichtung 4, d.h. bei Auftreffen des Fingerschutzbügels 11 auf das Hindernis 14 wird die Bewegung der Unterzange 1 in Richtung der Oberzange 3 am unteren Ende des Plungers 2 sofort abgestoppt.

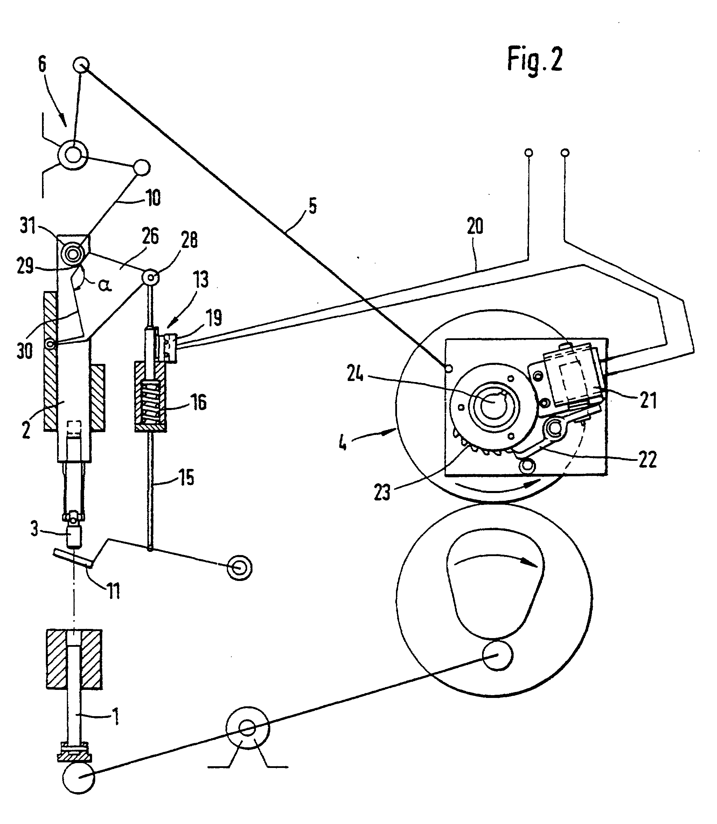

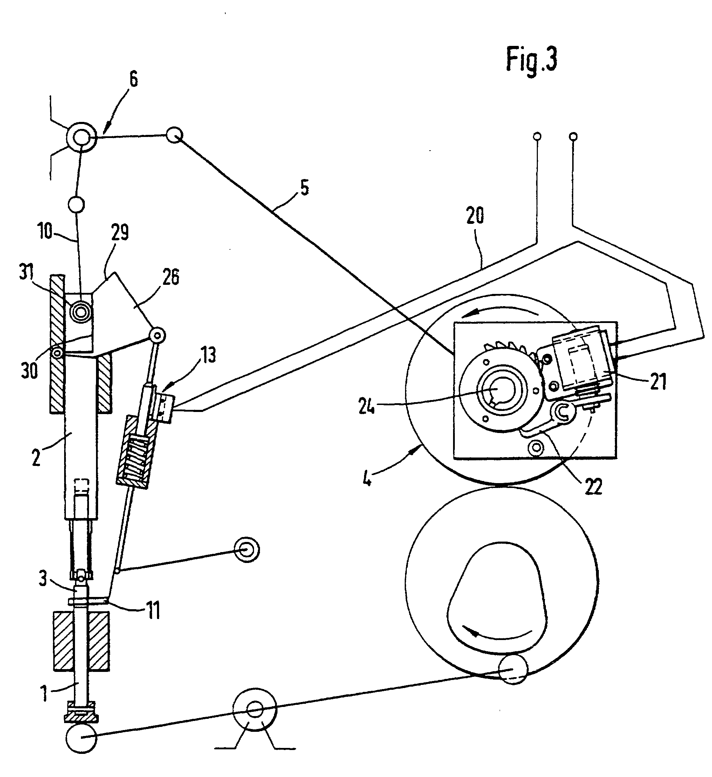

Die einzelnen Phasen der Bewegung der Antriebseinrichtung und der Funktion des Fingerschutzbügels sind in den Figuren 1 bis 4 schematisch veranschaulicht. Während Fig. 1 die vollständige Ruhelage, d.h. Ausgangslage der Vorrichtungselemente unmittelbar vor dem Auslösen eines Arbeitstaktes zeigt, ist in Fig. 2 schematisch der Beginn eines Arbeitstaktes durch Erregung des Elektromagneten 21 und damit Freigabe der Drehbewegung des Kurbeltriebs für den Antrieb der Pleuelstange 5 angedeutet. Durch den Elektromagneten 21 ist nämlich die Schaltklinke 22 in die Freigabelage, d.h. in die Lage übergeführt, in der die Kupplungssperre geöffnet ist und der Start der Drehbewegung erfolgen kann. Fig. 3 zeigt die Position der einzelnen Vorrichtungselemente nach Durchlauf einer Drehbewegung des Kurbeltriebs von 180 °. Die Oberzange 3 und die Unterzange 1 befinden sich dann in der Nietposition. Nach weiterer Drehung um 180 ° im Anschluß an den Nietvorgang befinden sich alle Vorrichtungselemente wiederum in der Ausgangslage, d.h. in der erneuten Startposition, wie sie in Fig. 1 gezeigt ist.

Fig. 4 veranschaulicht die Position der Vorrichtungselemente nach einer Drehung des Kurbeltriebs von 60 ° beim Auftreffen des Fingerschutzbügels 11 auf das Hindernis 14. Da der elektrische Schalter 19 den Stromkreis des der Kupplung dienenden Elektromagneten 21 sofort öffnet, fällt die Schaltklinke ein, öffnet die Kupplung und stoppt so die weitere Hubbewegung des Plungers 2. Sollte die Bedienungsperson mit ihrem Finger versehentlich in den Bereich der Bewegungsbahn der Oberzange gelangen, sorgt der voreilende Fingerschutzbügel 11 für einen sofortigen Stillstand der Vorrichtung; Verletzungen sind auf diese Weise wirksam unterbunden.

## Patentansprüche

1. Vorrichtung zum Ansetzen von Nieten, Knöpfen o. dgl., die aus einem Artikel-Unter-und einem Artikel-Oberteil bestehen, an eine Textilie o. dgl., mit einer das Artikelunterteil abstützenden Unterzange (1) und einem den Niethub ausführenden Plunger (2), dessen unterem Ende eine das Artikel-Oberteil beaufschlagende Oberzange (3) und dessen oberem Ende eine für die Hubbewegung sorgende Antriebseinrichtung (4) zugeordnet ist, und mit einem in die Bewegungsbahn der Oberzange reichenden, dem Plunger zugeordneten Fingerschutzbügel (11), der - nach Auslösung eines Plunger-Niethubes - bei Auftreffen auf ein Hindernis vor Erreichen seiner Endstellung die Antriebseinrichtung und damit den Plunger stillsetzt, **dadurch gekennzeichnet, daß** der Fingerschutzbügel (11) mit dem auf die Oberzange (3) einwirkenden Plunger (2) im Sinne einer Mitführung bei Auslösung der Hubbewegung durch die Antriebseinrichtung (4) über ein Koppelelement (13) verbunden ist und daß das Koppelelement die Stillsetzung der Antriebseinrichtung bei Auftreffen des Fingerschutzbügels (11) auf das Hindernis (14) auslöst.

2. Vorrichtung nach Anspruch 1, **dadurch gekennzeichnet, daß** das Koppelelement (13) durch einen Zweigelenkstab (15) mit einer eingeschalteten Feder gebildet ist, und daß dem Zweigelenkstab (15) ein elektrischer Schalter (19) zugeordnet ist, der im die Antriebseinrichtung des Plungers steuernden Stromkreis liegt und auf eine Längenänderung des Zweigelenkstabes (15) infolge Auftreffens des Fingerschutzbügels (11) auf das Hindernis (14) und damit Längenänderung unter Spannung der Feder (16) anspricht.

3. Vorrichtung nach Anspruch 1 oder 2, **dadurch gekennzeichnet, daß** die Antriebseinrichtung (4) einen Kurbeltrieb mit einer Pleuelstange (5) umfasst, deren freies Ende über eine der Kraftübertragung dienende Hebelanordnung (6) am Plunger (2) angreift.

4. Vorrichtung nach einem der Ansprüche 1 bis 3, **dadurch gekennzeichnet, daß** die Hebelanordnung (6) einen im Bereich des Plungers (2) um eine sich im wesentlichen quer zur Bewegungsbahn des Plungers (2) erstreckende Achse (7) verschwenkbar gelagerten zweiarmigen Winkelhebel (6) umfaßt, dessen erster Arm (8) mit dem freien Ende der Pleuelstange (5) gekoppelt ist und dessen zweiter Arm (9) mit dem Plunger (2) in Antriebsverbindung steht.

5. Vorrichtung nach Anspruch 4, **dadurch gekennzeichnet, daß** der zweite Arm (9) des Winkelhebels (6) mit dem Plunger (2) über einen schwenkbar an letzterem angreifenden Lenker (10) gekoppelt ist.

6. Vorrichtung nach Anspruch 4 oder 5, **dadurch gekennzeichnet, daß** dem Plunger (2) ein im wesentlichen in einer sich parallel zu seiner Achse erstreckenden Ebene in Abhängigkeit von der Plungerbewegung verschwenkbares Nockenelement (26) zugeordnet ist, an dem der zum Fingerschutzbügel (11) führende Zweigelenkstab (15) angelenkt ist.

7. Vorrichtung nach einem der Ansprüche 4 bis 6, **dadurch gekennzeichnet, daß** das Nockenelement (26) einen Anfangsnockenabschnitt (29) aufweist, der vom Plunger (2) während seines ersten Hubabschnitts über eine Rolle (31) oder dergleichen beaufschlagbar ist und sich derart schräg zur Plungerachse erstreckt, daß bei Plungerbewegung eine Verschwenkung des Nockenelements (26) erfolgt, sowie einen mit dem Anfangsnockenabschnitt einen solchen stumpfen Winkel α einschließenden Endnockenabschnitt (30), daß sich dieser zwecks Vermeidung einer weiteren Schwenkbewegung des Nockenelements (26) und damit des Fingerschutzbügels (11) praktisch parallel zur Bewegungsbahn des Plungers (2) und der Rolle (31) beim Durchlaufen dieses Endnockenabschnitts (30) erstreckt.

## Claims

1. A device for fixing rivets, buttons or the like, which comprise a lower part of the article and an upper part of the article, to a fabric or the like, with a lower gripper (1) supporting the lower part of the article and a plunger (2), which performs the riveting stroke and the lower end of which has associated therewith an upper gripper (3) acting on the upper part of the article and the upper end of which has associated therewith a drive device (4) ensuring the stroke movement, and with a finger guard bow (11), which extends into the movement path of the upper gripper and is associated with the plunger and which - after the initiation of a plunger riveting stroke - on encountering an obstacle stops the drive device and thus the plunger before reaching its end position, **characterized in that** the finger guard bow (11) is connected by means of a coupling element (13) to the plunger (2) acting on the upper gripper (3) in the manner of an entrainment on the initiation of the stroke movement by the drive device (4), and the coupling element initiates the stopping of the drive device when the finger guard bow (11) encounters an obstacle (14).

2. A device according to Claim 1, **characterized in that** the coupling element (13) is formed by a two-joint bar (15) with an inserted spring, and the two-joint bar (15) has associated with an electrical switch (19) which is in the circuit controlling the drive device of the plunger and responds to a change in length of the two-joint bar (15) as a result of the finger guard bow (11) encountering the obstacle (14) and thus a change in length, accompanied by the stressing of the spring (16).

3. A device according to Claim 1 or 2, **characterized in that** the drive device (4) comprises a crank gear with a connecting rod (5), the free end of which acts on the plunger (2) by means of a lever arrangement (6) used for power transmission.

4. A device according to one of Claims 1 to 3, **characterized in that** the lever arrangement (6) comprises a two-armed bell-crank lever (6) which is mounted in the area of the plunger (2) so as to be pivotable about a spindle (7) extending substantially transversely to the movement path of the plunger (2) and the first arm (8) of which is coupled to the free end of the connecting rod (5) and the second arm (9) of which is in drive connexion to the plunger (2).

5. A device according to Claim 4, **characterized in that** the second arm (9) of the bell-crank lever (6) is coupled to the plunger (2) by means of a guide rod (10) pivotably acting on the latter.

6. A device according to Claim 4 or 5, **characterized in that** the plunger (2) has associated therewith a cam element (26) which is pivotable substantially in a plane extending parallel to its axis as a function of the plunger movement and to which is articulated the two-joint bar (15) guiding the finger guard bow (11).

7. A device according to one of Claims 4 to 6, **characterized in that** the cam element (26) has a starting cam portion (29) which can be acted upon by the plunger (2) during its first stroke portion by means of a roller (31) or the like and extends in an oblique manner to the plunger axis in such a way that during the plunger movement there is a pivoting of the cam element (26), as well as an end cam portion (30) forming an obtuse angle α with the starting cam portion in such a way that, in order to avoid a further pivoting movement of the cam element (26) and thus of the finger guard bow (11), the said end cam portion (30) extends substantially parallel to the movement path of the plunger (2) and the roller (31) on passing through the said end cam portion (30).

## Revendications

1. Dispositif pour la pose de rivets, de boutons ou similaires, formés d'un élément inférieur d'article et d'un élément supérieur d'article, sur des produits textiles ou similaires, avec une pince inférieure (1) qui supporte l'élément inférieur d'article, avec un piston (2) exécutant la course de rivetage, à l'extrémité inférieure duquel est associée une pince supérieure (3) qui agit sur l'élément d'article supérieur et à l'extrémité supérieure duquel est associé un dispositif d'entraînement (4) pour produire la course de déplacement, avec un arceau de protection des doigts (11) associé au piston, qui s'étend jusque dans la trajectoire de déplacement de la pince supérieure et qui - après le déclenchement d'une course de rivetage du piston - lorsqu'il bute contre un obstacle avant d'avoir atteint sa position terminale, arrête le dispositif d'entraînement et avec lui le piston, **caractérisé en ce que** l'arceau de protection des doigts (11) est lié par un élément de couplage (13) au piston (2) agissant sur la pince supérieure, dans le sens d'un entraînement lors du déclenchement de la course de déplacement par le dispositif d'entraînement (4) et **en ce que** l'élément de couplage déclenche l'arrêt du dispositif d'entraînement lorsque l'arceau de protection des doigts (11) rencontre l'obstacle (14).

2. Dispositif selon la revendicartion 1, **caractérisé en ce que** l'élément de couplage (13) est formé d'une tige biarticulée (15) avec un ressort et **en ce qu'**un commutateur (19) électrique est associé à la tige biarticulée (15), lequel commutateur est placé dans le circuit de courant commandant le dispositif d'entraînement du piston et réagit à une variation de longueur de la tige biarticulée (15) due à la butée de l'arceau de protection des doigts (11) contre l'obstacle (14) et par conséquent à une variation de longueur sous contrainte du ressort (16).

3. Dispositif selon la revendication 1 ou 2,**caractérisé en ce que** le dispositif d'entraînement (4) comprend un mécanisme à bielle et manivelle avec une bielle (5), dont l'extrémité libre agit sur le piston (2) par l'intermédiaire du système de leviers (6) assurant la transmission des forces.

4. Dispositif selon une des revendications 1 à 3, **caractérisé en ce que** le système de leviers (6) comprend un levier coudé (6) à deux bras, monté pivotant autour d'un axe (7) qui s'étend essentiellement transversalement à la trajectoire de déplacement du piston (2), dont le premier bras (8) est couplé à l'extrémité libre de la bielle (5) et dont le deuxième bras (9) est lié en entraînement au piston (2).

5. Dispositif selon la revendication 4, **caractérisé en ce que** le deuxième bras (9) du levier coudé (6) est couplé au piston (2) par l'intermédiaire d'une biellette (10) pivotante agissant sur ledit piston.

6. Dispositif selon la revendication 4 ou 5, **caractérisé en ce qu'**au piston (2) est associé un élément formant came (26) qui pivote en fonction du déplacement du piston essentiellement dans un plan parallèle à son axe et sur lequel est articulée la tige biarticulée (15) menant à l'arceau de protection des doigts (11).

7. Dispositif selon une des revendications 4 à 6, **caractérisé en ce que** l'élément formant came (26) présente un tronçon de came d'entrée (29) qui est suivi par le piston (2), par l'intermédiaire d'un galet (31) ou similaire, pendant sa première partie de course et est incliné par rapport à l'axe de piston de telle sorte qu'un pivotement de l'élément formant came (26) ait lieu lors du déplacement du piston, ainsi qu'un tronçon de came de sortie (30) qui forme avec le tronçon de came d'entrée un angle obtus α tel que celui-ci, aux fins d'éviter tout pivotement supplémentaire de l'élément formant came (26), donc de l'arceau de protection des doigts (11), s'étend pratiquement parallèlement à la trajectoire de déplacement du piston (2) et du galet (31), lorsqu'il parcourt ledit tronçon de came de sortie (30).
